(19) **Europäisches Patentamt / European Patent Office / Office européen des brevets**

(11) **EP 4 708 195 A1**

(12) **EUROPEAN PATENT APPLICATION**

(43) Date of publication:
**11.03.2026 Bulletin 2026/11**

(21) Application number: **25193655.5**

(22) Date of filing: **04.08.2025**

(51) International Patent Classification (IPC):
**G06T 7/50** (2017.01)

(52) Cooperative Patent Classification (CPC):
**G06T 7/50;** G06T 2207/10012; G06T 2207/10024;
G06T 2207/10028; G06T 2207/20112;
G06T 2207/30252

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.09.2024 JP 2024157012**

(71) Applicant: **Canon Kabushiki Kaisha
Tokyo, 146-8501 (JP)**

(72) Inventor: **TSUKAHARA, Azusa
Tokyo, 146-8501 (JP)**

(74) Representative: **TBK
Bavariaring 4-6
80336 München (DE)**

(54) **IMAGE PROCESSING APPARATUS, IMAGE PROCESSING METHOD, AND STORAGE MEDIUM**

(57) An image processing apparatus (100) that obtains a depth from an input image includes: a depth information acquisition unit (101) configured to acquire depth information; a ground region determination unit (102) configured to determine a ground region of a subject of the image; and a reliability calculation unit (103) configured to calculate reliability for the depth acquired by the depth information acquisition unit based on the determination of the ground region determination unit. Here, the depth is an absolute distance between a standard point and a subject or an evaluation value relatively indicating a distance between a standard point and a subject. The reliability calculation unit calculates high reliability for a depth of a pixel of the ground region or a segmented region including the ground region.

**FIG. 3**

EP 4 708 195 A1

## Description

TECHNICAL FIELD

The present invention relates to an image processing apparatus, and particularly, to an image processing apparatus appropriate for improving reliability of a depth required from monocular depth estimation.

BACKGROUND

In the related art, a monocular depth estimation technique is known as a scheme for calculating 3-dimensional information from images. Monocular depth estimation is a technology for estimating a depth of an image (an evaluation value indicating a distance relatively or absolutely) generated by a monocular camera by machine learning. Specifically, a plurality of pairs of images and depths of certain scenes are provided and a relationship between the pairs is learned by machine learning, to generate a trained model. Then, in a phase of depth estimation, an image is input into a system. Based on the trained model, a depth is estimated and output.

For monocular depth estimation, for example, Patent Literature 1 (Dijk, Tom van, and Guido de Croon. "How Do Neural Networks See Depth in Single Images?." Proceedings of the IEEE International Conference on Computer Vision. 2019.) describes a technology for estimating a depth using a deep neural network. Patent Literature 1 indicates that, as a characteristic of monocular depth estimation, accuracy of depth output by the monocular depth estimation deteriorates when a ground portion between a subject and a ground is unclear.

For depth estimation using a monocular camera, for example, a technology that operates in an in-vehicle camera is described in Japanese Patent Application Laid-open No. 2007-188417. Japanese Patent Application Laid-open No. 2007-188417 discloses an image recognition device that estimates a position of a pedestrian's feet by fitting an image position of a pedestrian in accordance with a plurality of patterns.

A technology for adjusting a relative depth and a metric depth is described, for example, in Patent Literature 2 (Shariq Farooq Bhat, Reiner Birkl, Diana Wofk, Peter Wonka, Matthias Muller, ZoeDepth: Zero-shot Transfer By ComBining Relative and Metric Depth, ar-Xiv:2302.12288).

A technology for improving accuracy of monocular depth estimation is described, for example, in Patent Literature 3 (Ranftl, R., Lasinger, K., Hafner, D., Schindler, K., Koltun, V.: Towards RoBust Monocular Depth Estimation: Mixing Datasets for Zero-shot Cross-dataset Transfer.IEEE TPAMI (2020)).

Further, an image segmentation technology is described, for example, in Patent Literature 4 (Yuwen Xiong, Renjie Liao, Hengshuang Zhao, Rui Hu, Min Bai, Ersin Yumer, Raquel Urtasun, UPSNet: A Unified Panoptic Segmentation Network, CVPR 2019).

In general, monocular depth estimation has the advantages that a depth can be estimated using an image by simple hardware such as a monocular camera. As described in Patent Literature 1, however, monocular depth estimation has a problem that, in monocular depth estimation, accuracy of a depth output by monocular depth estimation deteriorates when a ground portion between a subject and a ground is unclear.

As a specific problematic scenario, it is conceivable that monocular depth estimation is used as an aid for automated driving. In automated vehicles, it is necessary to acquire a distance to recognize a surrounding environment. When monocular depth estimation is used, there is an advantage that depth information of objects located densely around a vehicle can be acquired. However, a ground portion of a surrounding vehicle or a signal becomes unclear due to occlusion (where an object in the foreground hides an object in the background), and thus there is a possibility of an inaccurate depth value. When path planning is performed based on such information, there is a possibility of a problem such as a collision with an obstacle occurring.

SUMMARY

According to an aspect of the present invention, preferably, an image processing apparatus that obtains a depth from an input image includes: a depth information acquisition unit configured to acquire depth information; a ground region determination unit configured to determine a ground region of a subject of the image; and a reliability calculation unit configured to calculate reliability for the depth acquired by the depth information acquisition unit based on the determination of the ground region determination unit.

Features of the present disclosure will become apparent from the following description of embodiments with reference to the attached drawings. The following description of embodiments is described by way of example.

The present disclosure in its first aspect provides an information processing apparatus as specified in claim 1. Optional features are specified in claims 2 to 13.

The present disclosure in its second aspect provides a method for controlling an image processing method by an image processing apparatus as specified in claim 14.

The present disclosure in its third aspect provides a recording medium as specified in claim 15.

BRIEF DESCRIPTION OF THE DRAWINGS

FIG. 1 is a diagram illustrating a functional configuration of an image processing apparatus according to the first embodiment.

FIG. 2 is a diagram illustrating a hardware and software configuration of the image processing apparatus according to the first embodiment.

FIG. 3 is a flowchart illustrating a process of the image processing apparatus according to the first embodiment.

FIG. 4 is a flowchart illustrating a detailed reliability calculation process.

FIGS. 5A, 5B, and 5C are diagrams illustrating a scheme for determining a ground region in an image.

FIGS. 6A and 6B are diagrams illustrating a process when an image is segmented and reliability is assigned to a depth of each segment.

FIG. 7 is a diagram illustrating a functional configuration of an image processing apparatus according to a second embodiment.

FIG. 8 is a diagram illustrating a hardware and software configuration of the image processing apparatus according to the second embodiment.

FIG. 9A is a diagram illustrating a structure of an image sensor.

FIG. 9B is a diagram illustrating a structure of a light-guiding layer and a light-receiving layer in each pixel.

FIG. 10 is a diagram illustrating a light flux received by an image sensor.

FIGS. 11A and 11B are diagrams illustrating a positional relationship between a standard image and a reference image.

FIG. 12 is a flowchart illustrating a process of an image processing apparatus according to the second embodiment.

FIG. 13 is a diagram illustrating a hardware and software configuration of an image processing apparatus according to a third embodiment.

DESCRIPTION OF THE EMBODIMENTS

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

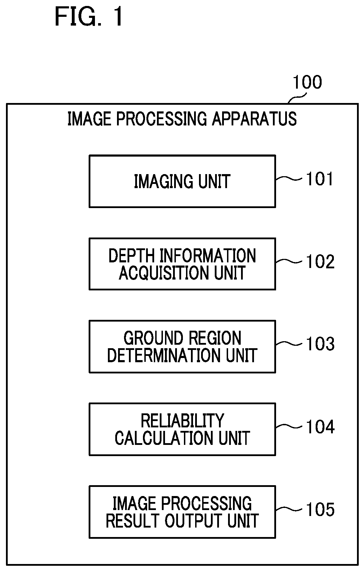

Hereinafter, embodiments of the present invention will be described with reference to FIGS. 1 to 13.

First Embodiment

Hereinafter, a first embodiment will be described with reference to FIGS. 1 to 6B.

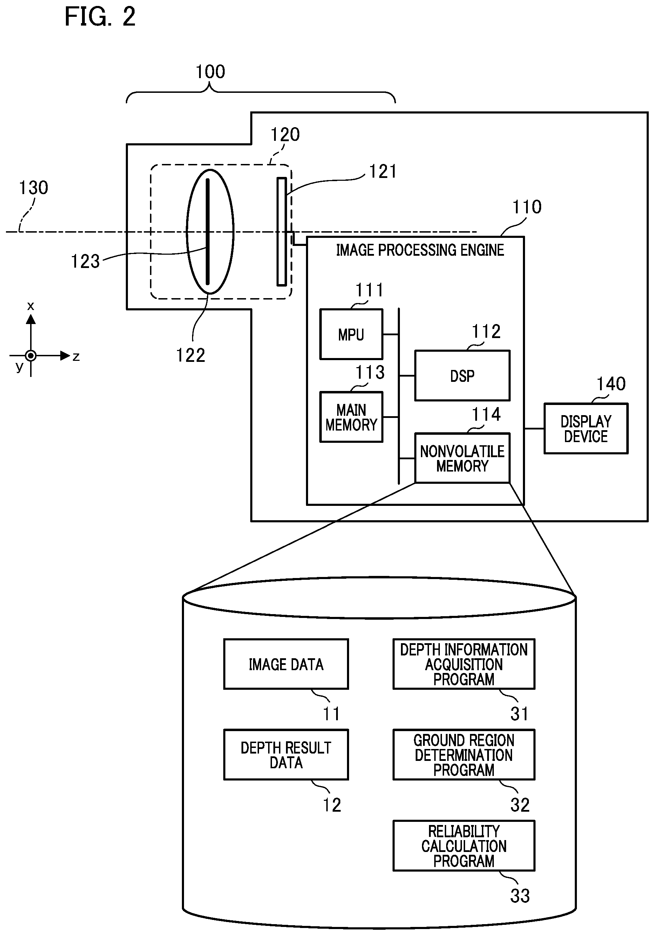

First, a configuration of an image processing apparatus according to the first embodiment will be described with reference to FIGS. 1 and 2.

FIG. 1 is a diagram illustrating a functional configuration of an image processing apparatus according to the first embodiment.

FIG. 2 is a diagram illustrating a hardware and software configuration of the image processing apparatus according to the first embodiment.

An image processing apparatus 100 includes an imaging unit 101, a depth information acquisition unit 102, a ground region determination unit 103, a reliability calculation unit 104, and an image processing result output unit 105 as a functional configuration, as illustrated in FIG. 1.

The imaging unit 101 is a functional unit that captures an image of the outside and takes the image as an input image. The depth information acquisition unit 102 is a functional unit that acquires a depth for each pixel or each region of the image. The ground region determination unit 103 is a functional unit that estimates a ground region of an object appearing in an image. The reliability calculation unit 104 is a functional unit that calculates reliability for the depth acquired by the depth information acquisition unit 102. The image processing result output unit 105 is a functional unit that outputs the depth acquired by the depth information acquisition unit 102 and the reliability calculated by the reliability calculation unit 104 as a result of image processing.

Next, a hardware and software configuration of the image processing apparatus will be described with reference to FIG. 2.

The image processing apparatus is a device that captures an image of an outside situation and obtains a depth from the captured image. The image processing apparatus includes an imaging mechanism 120, an image processing engine 110, and a display device 140, as illustrated in FIG. 2.

The imaging mechanism 120 is a mechanism that takes in light from the outside and includes an image sensor 121 and an optical system 122.

The optical system 122 is a mechanism that forms an image of an object or condenses light using a physical phenomenon such as refraction, reflection, and diffraction of light and has a function of forming an image of a subject on the image sensor 121. The optical system 122 includes a plurality of lens groups (not illustrated) and an aperture stop (not illustrated), and includes an exit pupil 123 located a predetermined distance away from the image sensor 121. The exit pupil 123 is an image of an aperture stop formed by the optical system on an image side relative to the aperture stop. The image sensor 121 is a component that converts a captured image into an image signal. The image sensor 121 is configured as a semiconductor sensor such as a complementary metal oxide semiconductor (CMOS) or a charge coupled device (CCD). A subject image formed on the image sensor 121 via the optical system 122 is photoelectrically converted by the image sensor 121 to generate an image signal based on the subject image.

In the present specification, in 3-dimensional coordinates, the z axis is parallel to an optical axis 130 of the optical system 122, and the x axis and the y axis are perpendicular to each other and are perpendicular to the optical axis.

The image processing engine 110 is a device that executes information processing on an image captured by the imaging mechanism 120. In the image processing engine 110, for example, as illustrated in FIG. 2, an MPU 111, a DSP 112, a main memory 113, and a nonvolatile memory 114 are connected by a bus. A micro process unit (MPU) 111 is a processor that executes a program with reference to data on the main memory 113. The main memory 113 is a high-speed volatile semiconductor storage device that retains a program and data accessed by the MPU 111. The DSP 112 is a process that converts an image signal into digital data of an image. The nonvolatile memory 114 is a nonvolatile semiconductor storage device such as a flash memory that stores a program and data. The nonvolatile memory 114 according to the present embodiment stores image data 11 and depth result data 12 that is result data acquired by analyzing the image data and obtaining a depth. On the nonvolatile memory 114, a depth information acquisition program 31, a ground region determination program 32, and a reliability calculation program 33 are installed. The depth information acquisition program 31, the ground region determination program 32, and the reliability calculation program 33 are programs for implementing functions of the depth information acquisition unit 102, the ground region determination unit 103, and the reliability calculation unit 104, respectively.

The display device 140 is a device such as a liquid crystal display (LCD) that displays, for a user, a captured image and a result of a depth obtained for the image.

The image processing engine 110 may be configured with an MPU and a memory that stores a processing program as in FIG. 2 or may be configured with a logical circuit device such as an ASIC or a field programmable gate array (FPGA). By grounding a camera as an imaging unit as in a personal computer (PC), the image processing engine 110 may be implemented with a general PC.

Next, an overview of a scheme of obtaining a depth according to the present embodiment will be described.

The depth information acquisition unit 102 of the image processing apparatus 100 calculates a depth using a machine learning model that executes monocular depth estimation from an image acquired by the imaging unit 101. As the scheme of the monocular depth estimation, for example, the scheme described in Patent Literature 2 can be used. In this scheme, a metric depth that is an absolute value can be obtained as the depth. That is, the depth in Patent Literature 2 is an absolute distance between a standard point (camera position) and a subject.

As the scheme of the monocular depth estimation, for example, the scheme described in Patent Literature 3 can be used. In this scheme, an evaluation value relatively indicating a distance between a standard point and a subject is output as the depth. The present invention is not limited thereto and another scheme of monocular depth estimation may be used.

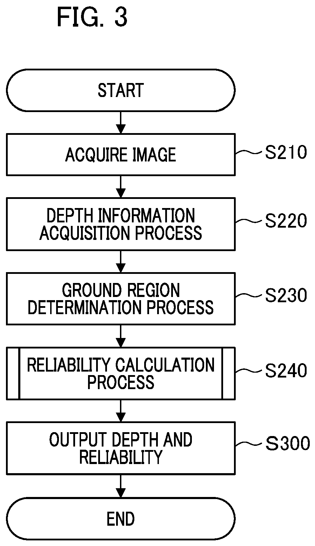

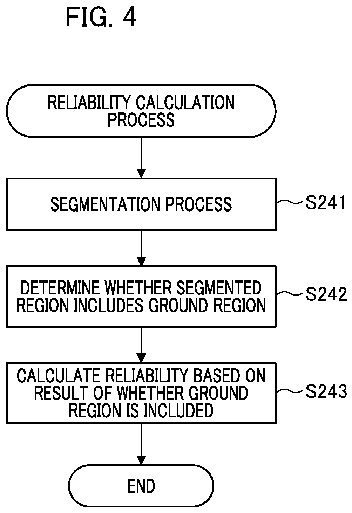

Next, a process of the image processing apparatus according to the first embodiment will be described with reference to FIGS. 3 and 4.

FIG. 3 is a flowchart illustrating a process of the image processing apparatus according to the first embodiment.

FIG. 4 is a flowchart illustrating a detailed reliability calculation process.

First, the image processing apparatus 100 acquires an image captured by the imaging unit 101 (S210).

The image processing apparatus 100 may execute a development process on the acquired image. For example, a color image may be generated by executing demosaicing or color tone may be adjusted through white balance correction.

Subsequently, the depth information acquisition unit 102 of the image processing apparatus 100 obtains a depth for each pixel or each region of the acquired image (S220).

Subsequently, the ground region determination unit 103 of the image processing apparatus 100 determines a ground region from the acquired image and the depth for the image obtained in S220 (S230). Any known scheme may be used as a method. The details of the determination for the ground region will be described below.

Subsequently, the reliability calculation unit 104 of the image processing apparatus 100 calculates reliability indicating a likelihood of the depth of the image acquired in S220 using the ground region acquired in S230 (S230).

For example, a high reliability is assigned to a depth at the same pixel positions as the ground region acquired in S230, while a low reliability is assigned to other depth information. The detail on the calculation of reliability will be described below.

Subsequently, the image processing result output unit 105 of the image processing apparatus 100 outputs the depth and the reliability obtained for the captured image (S300).

For example, the depth and the reliability obtained for the image may be displayed on the display device 140 as an image color-coded for each depth and each reliability (for example, a depth map in FIG. 2 of Patent Literature 2). Additionally, the image may be color-coded for each depth like a depth map, and corresponding reliability may be displayed as a numerical value.

Next, the details of the reliability calculation process will be described with reference to FIG. 4.

This is a process corresponding to S240 of FIG. 3.

First, the image processing apparatus 100 executes a segmentation process on an image given as an input (S241). This process is a process of identifying a subject region having the same property. For example, class information of a subject may be given to each pixel using the scheme described in Literature 4 to execute segmentation. This is a representative model of panoptic segmentation (FIG. 4: panoptic segmentation).

Subsequently, the ground region determination unit 103 of the image processing apparatus 100 determines whether the segment of each of the subject regions segmented in S241 includes the ground region (S242).

Subsequently, the reliability calculation unit 104 of the image processing apparatus 100 calculates reliability based on a determination result in S242 (S243). When the reliability is calculated, high reliability is assigned to the depth of the segment on the subject region including the ground region while low reliability is assigned to the depth of the segment of the subject region including no ground region. In particular, the high reliability may be calculated for a pixel of the ground region, and intermediate reliability may be calculated for a depth of the segment on the other subject regions including no ground region.

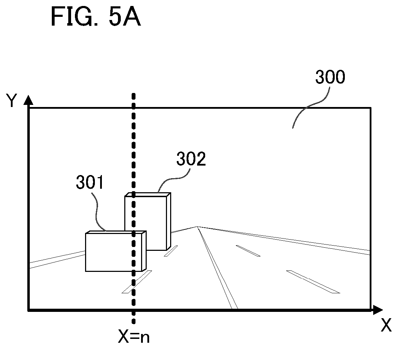

Next, a scheme for determining a ground region in an image will be described with reference to FIGS. 5A to 5C.

FIG. 5A is a diagram (Part 1) illustrating a scheme for determining a ground region in an image.

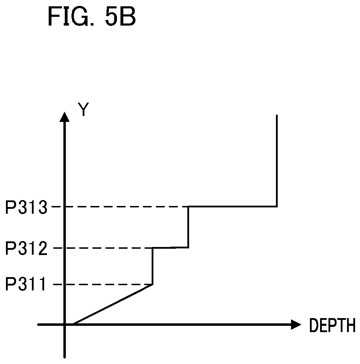

FIG. 5B is a diagram (Part 2) illustrating the scheme for determining the ground region in the image.

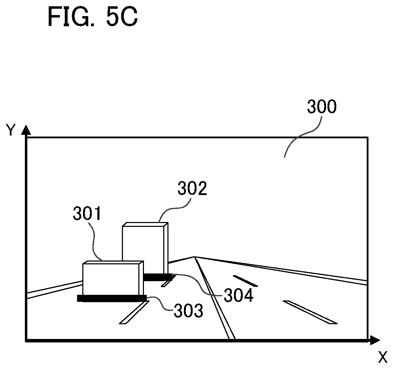

FIG. 5C is a diagram (Part 3) illustrating the scheme for determining the ground region in the image.

For example, a method of executing estimation from an image, the scheme in Japanese Patent Application Laid-open No. 2007-188417 may be used to determine the ground region of S230 in the flowchart of FIG. 3. In this scheme, a plurality of patterns for some of subject candidate objects are first stored in advance. Subsequently, it is determined whether there is a pattern matching the above pattern for the acquired image and the ground region is estimated from the size of the matched pattern (Paragraph 0044).

In the scheme of determining the ground region for an image, the ground region may be determined from the depth of an acquired pixel of the image. FIG. 5A illustrates an image 300 given as an input to the image processing apparatus 100. As illustrated in FIG. 5A, there are subjects 301 and 302 in the image 300.

FIG. 5B illustrates a graph in which pixel positions in the Y direction and depths are plotted on depths for pixels output from the image processing apparatus 100 at n that is a pixel position in the X direction (FIG. 5A). In FIG. 5B, a pixel position in the Y direction at which a change in the depth is abruptly occurs at three points of P311 to P313. Here, P311 is a ground point between a subject 301 and the ground. P312 is a switching point between the subject 301 and a subject 302. P313 is a switching point between the subject 302 and the background.

In this scheme, a cross-sectional plot of depth information in the Y direction is generated at any pixel position in the X direction, and a point at which the pixel position is the smallest is selected as a ground point from points at which the change in the depth is abrupt. In the case of FIG. 5B, P311 is selected as the ground point. The same process may also be executed a plurality of times while changing the pixel position in the X direction. FIG. 5C illustrates a result of executing the determination of the ground point on the front side of the image 300 while changing the pixel position in the X direction pixel by pixel. Regions 303 and 304 illustrated here are regions determined to be ground points.

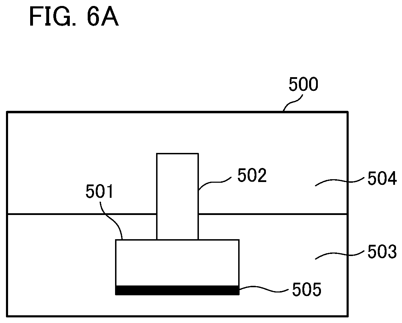

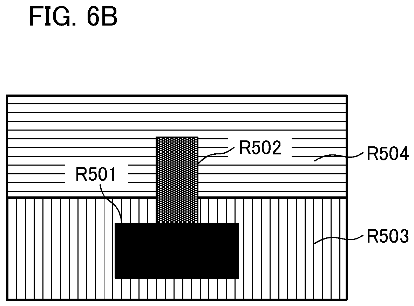

Next, a process of calculating reliability of a depth acquired for an image will be described with reference to FIGS. 6A and 6B.

FIG. 6A is a diagram (Part 1) illustrating a process when an image is segmented and reliability is assigned to a depth of each segment.

FIG. 6B is a diagram (Part 2) illustrating the process when the image is segmented and the reliability is assigned to a depth of each segment.

As a scheme of assigning the reliability to the acquired depth, for example, a method of assigning high reliability to a depth of the pixel at the same pixel position as the ground region acquired in S230 and assigning low reliability to the other depth information is conceivable.

As another scheme of assigning reliability to the acquired depth, a method of segmenting an image and assigning reliability of a depth of each segment is conceivable.

When reliability is calculated for a depth by another method (for example, analyzing an AI model to obtain the reliability), the pixels or segments of the ground region may be combined focusing on the ground region according to the present embodiment. For example, for the reliability calculated for the depth of a pixel or a segment, a predetermined constant of 1 or more may be multiplied and calculated as the reliability of the pixel or the segment of the ground region, or a predetermined positive constant may be added to obtain new reliability.

FIG. 6A is a diagram illustrating an example of an input image. FIG. 6B is a diagram schematically illustrating a result of executing the segmentation of S241 on the image. Here, an image 500 is an image given as an input to the image processing apparatus 100. In the image 500, there are a subject 501, a subject 502, a ground 503, and a background 504. The subject 502 is located behind the subject 501, and a lower end is occluded and thus not visible. Then, by executing the segmentation process of S241, a class label with the same value is assigned to each region. Accordingly, the image is segmented into four subject regions including a first subject region R501, a second subject region R502, a ground region R503, and a background region R504, as illustrated in FIG. 5B.

Here, it is assumed that a region 505 in FIG. 6A is a region determined to be the ground region in S230. At this time, of the regions R501 to R504, the ground region 505 determined to be the ground region are two first subject region R501 and the ground region R503. In the example of FIG. 6A, high reliability is calculated for a depth of a segment on the first subject region R501 and the ground region R503, while low reliability is calculated for depths of segments on the second subject region R502 and the background region R504.

In the example of FIG. 6A, the example in which the ground region is calculated from the result of the segmentation, and high reliability is assigned to the depth of the segment regions including the ground region has been described. As another method of calculating the ground region from the result of the segmentation, the following method may also be used.

First, a boundary region between a region assigned with class information of a subject and a region assigned with class information of the ground is set as a ground region candidate. Next, it is determined whether the ground region candidate is a bottom side of the subject. For example, if the shape of the boundary region is longer in the horizontal direction than in the vertical direction, it may be determined as the bottom side. Finally, the region determined to be the bottom side of the subject is determined as the ground region.

In this way, according to the present embodiment, the ground region is determined, and high reliability is assigned to the depth of either the ground region or a grounding object region. The reason why reliability of the depth of a segment including a ground region of an object is set to be high through segmentation of an image in this way is as follows.

(1) The ground region has stable characteristics.

The region where an object is in contact with the ground (for example, a person's feet, a car's tire, or the like) typically has very stable characteristics within a scene. In most cases, a depth can be estimated more accurately in the region than in other regions. Since the ground region has a physically clear contact point and is less affected by an occlusion or a motion of a subject, it is appropriate that the reliability is set to be high.

(2) Physical contact is clear.

The ground region indicates that an object in the scene is physically touching the ground, and thus it can be used as a standard for depth.
For example, if a car is in contact with the road, the depth of the car's ground region should match the depth of the road.
Such physical consistency serves as a factor that enhances the reliability of the depth.

(3) Noise is reduced by segmentation.

By segmenting the image, consistent characteristics within each segment can be used to improve the reliability of the depth. In particular, since the segment including the ground region is clearly distinguished from other objects or the background, the result of the obtained depth is more robust to noise and the reliability is determined to be high.

(4) Scene understanding is assisted.

A depth estimation model requires an understanding of the entire scene. By assigning high reliability to the ground region, the model can more accurately ascertain an overall structure and a physical relationship, and thus can also influence depth estimation in other regions positively.

(5) Importance in an actual application.

In a field such as automated driving and robotics, the depth of the ground region between the ground and an object is particularly important.
By assigning high reliability to the region, it is possible to make safer and more reliable determination, for example, when a motion of a vehicle can be controlled.

Second Embodiment

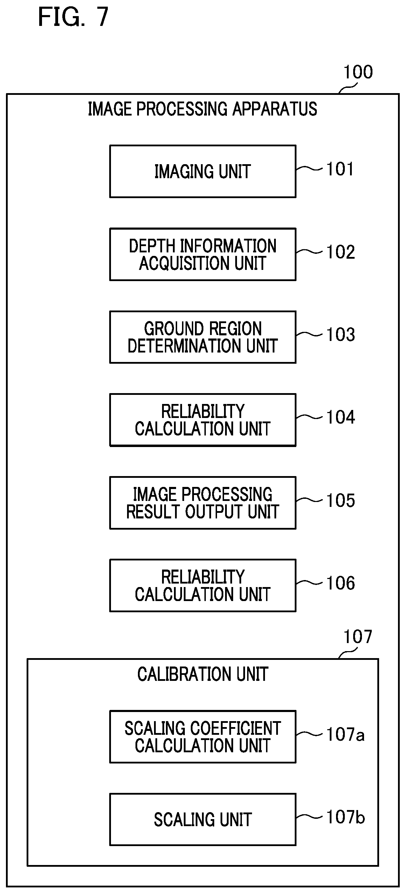

Hereinafter, a second embodiment will be described below with reference to FIGS. 7 to 12.

In the first embodiment, an image processing apparatus that assigns high reliability to a pixel or a region of a segment related to a ground region by focusing on the ground region in an image when a depth is estimated has been described.

In the present embodiment, an image processing apparatus in which a function of calculating a distance from an image and a function of executing calibration of a depth based on the distance are added in addition to the functions of the image processing apparatus according to the first embodiment will be described.

Hereinafter, in description of the present embodiment, differences from the first embodiment will be described mainly.

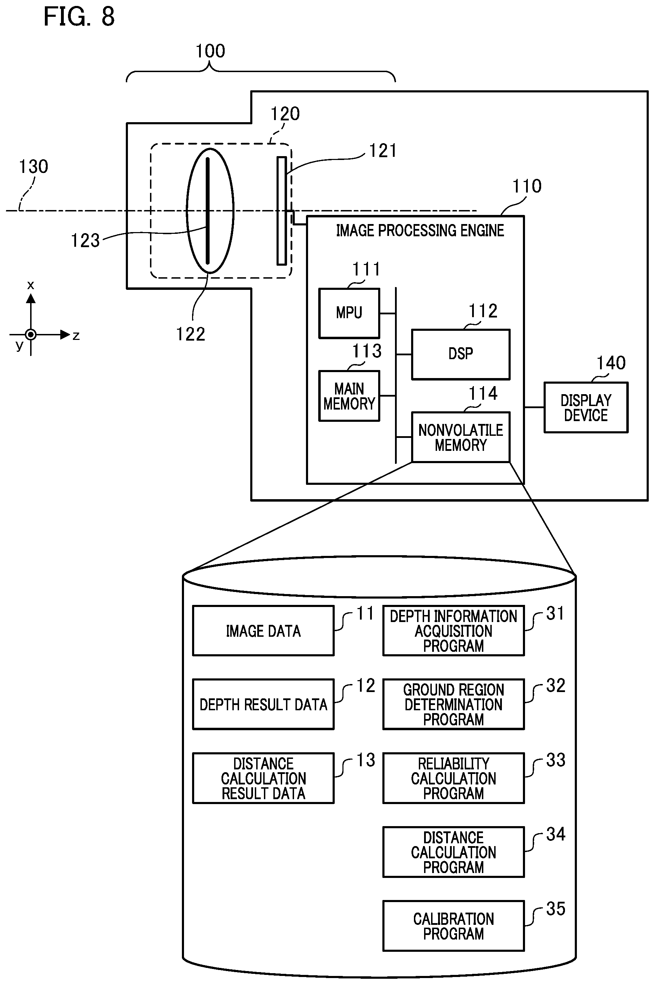

First, a configuration of the image processing apparatus according to the first embodiment will be described with reference to FIGS. 7 and 8.

FIG. 7 is a diagram illustrating a functional configuration of the image processing apparatus according to the second embodiment.

FIG. 8 is a diagram illustrating a hardware and software configuration of the image processing apparatus according to the second embodiment.

As illustrated in FIG. 7, in the image processing apparatus 100, as a functional configuration, a distance calculation unit 106 and a calibration unit 107 are added in addition to the configuration of the first embodiment.

The calibration unit 107 includes sub-functional units including a scaling coefficient calculation unit 107a and a scaling unit 107b.

The distance calculation unit 106 is a functional unit that calculates a distance from an image. The details of a distance calculation process will be described below.

The calibration unit 107 is a functional unit that executes calibration of a distance converted from a depth obtained by the depth information acquisition unit 102. The scaling coefficient calculation unit 107a is a functional unit that calculates a scaling coefficient for fitting when a depth is converted into a distance using a fitting function. The scaling unit 107b is a functional unit that scales a depth to calculate a distance using a fitting function of a scaling coefficient calculated by the scaling coefficient calculation unit 107a. The details of the scaling coefficient and the fitting function will be described below.

The image processing result output unit 105 according to the present embodiment also outputs information regarding the distance in addition to a depth and reliability as an image processing result.

A hardware configuration of the image processing apparatus according to the second embodiment is similar to the hardware of the image processing apparatus according to the first embodiment. As software of the image processing apparatus according to the second embodiment, as illustrated in FIG. 8, a distance calculation program 34 and a calibration program 35 are installed in the nonvolatile memory 114 in addition to the program of the first embodiment. The distance calculation program 34 and the calibration program 35 are programs for implementing functions of the distance calculation unit 106 and the calibration unit 107, respectively. Distance calculation result data 13 is also stored in the nonvolatile memory 114.

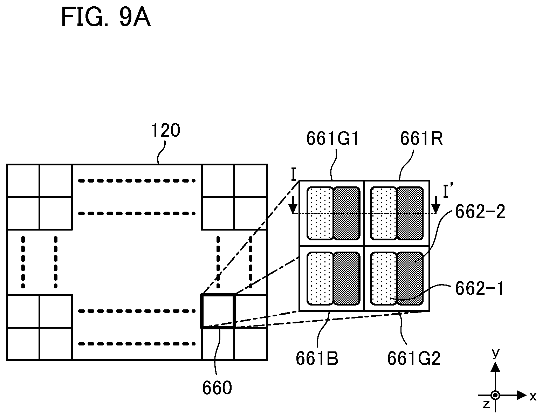

Next, a process in which the distance calculation unit of the image processing apparatus obtains a distance from an image will be described with reference to FIGS. 9A to 11B with reference to the hardware configuration.

FIG. 9A is a diagram illustrating a structure of an image sensor.

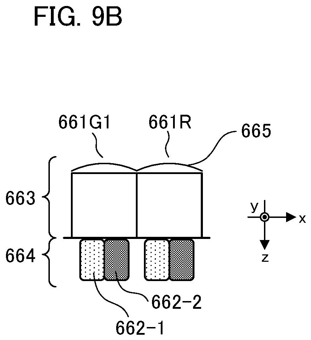

FIG. 9B is a diagram illustrating a structure of a light-guiding layer and a light-receiving layer in each pixel.

The imaging mechanism 120 has been described in the first embodiment.

In he present embodiment, a structure of an image sensor will be described in more detail.

FIG. 9A is an xy cross-sectional view of the image sensor 121. The image sensor 121 is configured such that a plurality of pixel groups 660 of 2 rows × 2 columns are arrayed for one sensor. In the pixel group 660, green pixels 661G1 and 661G2 are arrayed in a diagonal direction and other two pixels are arrayed as a red pixel 661R and a blue pixel 661B.

FIG. 9B schematically illustrates an I-I' cross-section of the pixel group 660 illustrated in FIG. 9A. Each pixel includes a light-receiving layer 664 and a light-guiding layer 663. In the light-receiving layer 664, two photoelectric conversion portions (a first photoelectric conversion portion 662-1 and a second photoelectric conversion portion 662-2) that photoelectrically convert received light are arrayed. In the light-guiding layer 663, microlenses 665 that efficiently guide light fluxes incident on a pixel to the photoelectric conversion portions, color filters (not illustrated) that pass light with predetermined wavelength bands, and wirings (not illustrated) for image reading and pixel driving, and the like are arrayed. In each pixel, a wiring (not illustrated) is provided. Each pixel can transmit an image signal (output signal) to the image processing engine 110 via the wiring. FIGS. 9A and 9B illustrate an example of a photoconversion portion divided into two portions in one pupil-splitting direction (later output) (x-axis direction). Depending on the specifications, an image sensor that includes a photoelectric conversion portion divided in two pupil-splitting directions (the x axis and the y axis) may be used. The pupil-splitting directions and the number of divisions are any directions and number.

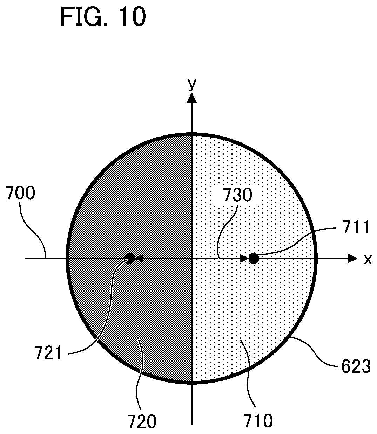

Next, a light flux received by the image sensor will be described with reference to FIG. 10.

FIG. 10 is a diagram illustrating a light flux received by an image sensor.

In FIG. 10, the exit pupil 123 of the optical system 122 viewed from an intersection point (center image height) of the optical axis 130 and the image sensor 121 is illustrated. A first light flux passing through a first pupil region 710, and a second light flux passing through a second pupil region 720 that are different regions of the exit pupil 123 are incident on the photoelectric conversion portions 662-1 and 662-2, respectively. Photoelectric conversion portions 615-1 and 615-2 in each pixel can generate image signals corresponding to an image A (first image) and an image B (second image), respectively, by executing photoelectric conversion on the incident light fluxes. The generated image signals are transmitted to the image processing engine 110.

In FIG. 10, a centroid position of the first pupil region 710 (first centroid position 711) and a centroid position of the second pupil region 720 (second centroid position 721) are illustrated. In the present embodiment, the first centroid position 711 is decentered (moved) from the center of the exit pupil 123 along the first axis 700. Meanwhile, the second centroid position 721 is decentered (moved) in the opposite direction from the first centroid position 711 along the first axis 700. A direction connecting the first centroid position 711 and the second centroid position 721 is referred to as the "pupil-splitting direction." An inter-center distance between the first centroid position 711 and the second centroid position 721 is defined as a baseline length 730.

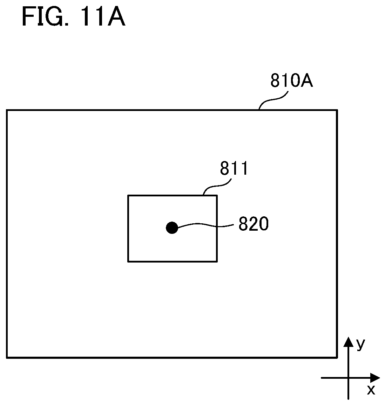

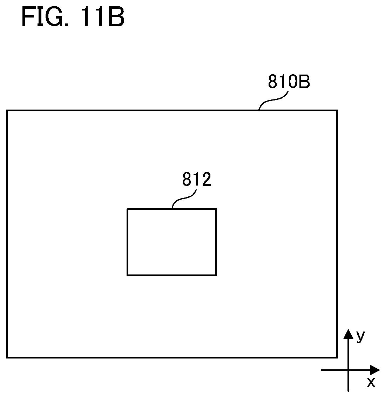

Next, the details of a process in which the image processing apparatus calculates a distance from an image will be described with reference to FIG. 10 above and FIGS. 11A and 11B.

FIG. 11A is a diagram (Part 1) illustrating a positional relationship between a standard image and a reference image.

FIG. 11B is a diagram (Part 2) illustrating the positional relationship between a standard image and a reference image.

The distance calculation unit 106 calculates a distance as follows from an image set of the images A and B acquired by the imaging mechanism 120.

First, the distance calculation unit 106 calculates a disparity from the images A and B as follows. An image set including the images A and B obtained from the imaging mechanism 120 is generated, and the generated image set is stored in a memory of the image processing engine 110. The generated image set may be subjected to a correction process to compensate for imbalance in an amount of light, mainly caused by vignetting of the optical system 122. Specifically, the balance of the amount of light is corrected by correcting luminance values of the images A and B so that the luminance values remain approximately constant regardless of a field of view based on a result obtained when the imaging mechanism 120 captures a uniformly bright planar light source in advance. For example, to reduce an influence of photon shot noise or the like generated in the image sensor 121, a bandpass filter or a lowpass filter may be applied to the obtained images A and B.

Subsequently, in the image A, an image of a partial region including a pixel in which disparity is calculated (a pixel of interest) is set as a standard image, and a reference image is set in the image B. Then, while moving the position of the reference image in a predetermined direction, a mutual correlation value between the standard image and the reference image is calculated.

Here, a positional relationship between the standard image and the reference image will be described with reference to FIGS. 11A and 11B. An image A 810A is illustrated in FIG. 11A and an image B 810B is illustrated in FIG. 11B. The distance calculation unit 106 calculates mutual correlation values between the image A 810A and the image B 810B. Specifically, first, a partial region including a pixel of interest 820 and neighboring pixels is extracted from the image A 810A and is set as a standard image 811. Subsequently, in order to calculate the mutual correlation based on the image A, a region that has the same area (image size) as the standard image 811 is extracted from the image B 810B and is set as a reference image 812. Thereafter, a position at which the reference image 812 is extracted on the image B 810B is moved, and the mutual correlation values between the standard image 811 and the reference image 812 are calculated for each movement amount (each position). Accordingly, a mutual correlation calculation unit generates mutual correlation values formed from a sequence of correlation value data corresponding to each movement amount. At this time, a movement direction of the reference image 812 may be any direction. A direction in which the reference image 812 is moved and the mutual correlation calculation is executed is referred to as a disparity search direction. The mutual correlation values may be values by which the degree of correlation between the standard image 811 and the reference image 812 is evaluated, and any known method may be used for the calculation. For example, a sum of squared differences (SSD), a sum of absolute differences (SAD), or normalized mutual correlation (NCC) can also be used.

Subsequently, a disparity value is calculated using any known scheme. For example, a position at which the mutual correlation value is minimized may be used as the disparity value. Further, sub-pixel estimation may be executed to obtain disparity in units of decimal pixels. For instance, when the mutual correlation value is a sum of squared differences (SSD), a minimum value can be determined by interpolation using a quadratic function. When the mutual correlation value is a sum of absolute differences (SAD), the minimum value can be obtained by interpolation using an equiangular linear function.

Subsequently, the distance calculation unit 106 converts a disparity into a distance (defocus amount) from the image sensor 121 to an image forming point formed by the optical system 122, as follows. Hereinafter, a coefficient for converting the disparity amount into a defocus amount is referred to as a BL value. When BL denotes a BL value, $\Delta L$ denotes a defocus amount, and d denotes a disparity amount, the disparity amount d can be converted to the defocus amount $\Delta L$ using the following Equation (1).

$$\Delta L = BL \times d \qquad \dots \text{(Equation 1)}$$

Subsequently, the distance calculation unit 106 converts the defocus amount obtained above into a distance as follows.

When the defocus amount is converted into a subject distance, a formula for a lens in geometrical optics shown in the following equation (Equation 2) can be used.

$$1/A + 1/B = 1/f \qquad \dots \text{(Equation 2)}$$

Here, A is a distance from an object plane to the optical system 122, B is a distance from a principal point of the optical system 122 to an image plane, and f is a focal length of the optical system 122.

In (Equation 2), the focal length is a known value. The value of B can be calculated using the defocus amount. Accordingly, by using the focal length and the defocus amount, the distance A to the object plane, that is, the distance, can be calculated.

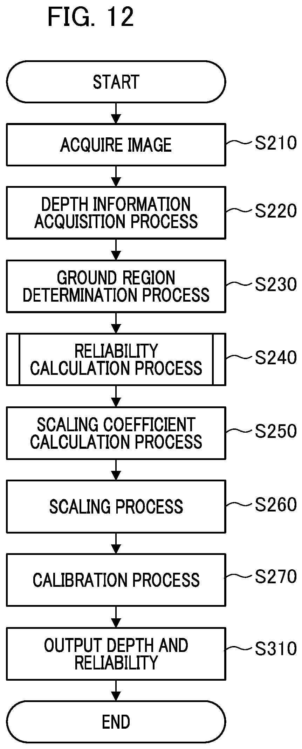

Next, a specific image processing according the second embodiment will be described with reference to FIG. 12.

FIG. 12 is a flowchart illustrating a process of an image processing apparatus according to the second embodiment.

Functions of the image processing apparatus according to the present embodiment different from the image processing apparatus of the first embodiment are a function of calculating a distance from an image, a function of converting a depth into a distance, and a function of executing calibration of the distance calculated by another method.

The depth information acquisition unit 102 obtains a depth from an image captured by the imaging mechanism 120 using a machine learning model that executes monocular depth estimation by the same scheme as that of the first embodiment. A depth obtaining target may be either the image A or the image B as described above, or an image obtained by combining the images A and B. Here, a depth of an image obtained by the depth information acquisition unit 102 represents a value relatively indicating a distance. Alternatively, the depth may be acquired by inputting depth information of an image calculated by an external apparatus.

In the process of the image processing apparatus according to the second embodiment, S250 to S270 are added to the process illustrated in FIG. 3, and S310 is added in place of S300. Processes of the following steps will be described below.

The scaling coefficient calculation unit 107a of the image processing apparatus 100 calculates a scaling coefficient for converting the depth representing relatively distance acquired from a depth calculation apparatus 640 into a distance value with reference to the reliability calculated in step S240 (S250). Specifically, the scaling coefficient can be fitted by an appropriate function corresponding to an output of a depth of an image obtained from the depth information acquisition unit 102. For example, when a relative value of an output of the depth information acquisition unit 102 proportional to the inverse of the distance is output, a linear function of the form Y=AX+B may be used for fitting, and coefficients A and B can be obtained from the scaling coefficient. Here, a depth used for fitting is limited to a depth of which the reliability calculated in step S240 is higher than a predetermined threshold.

Subsequently, the scaling unit 107b of the image processing apparatus 100 scales the depth of the image based on the fitting function that has the scaling coefficients calculated in step S250, and calculates a distance corresponding to the depth (S260).

Subsequently, the calibration unit 107 of the image processing apparatus 100 calibrates the distance obtained by scaling the depth and the distance obtained from a difference of the image by the distance calculation unit 106 (S270).

That is, at a depth at which reliability higher than a predetermined threshold is assigned to a certain pixel by the reliability calculation unit 104, the distance obtained by scaling the depth is set as an integrated distance for the pixel. Otherwise, that is, at the depth at which reliability lower than the predetermined threshold is assigned to the certain pixel, the distance obtained from the difference of the image by the distance calculation unit 106 is set as the integrated distance for the pixel.

Finally, the image processing result output unit 105 of the image processing apparatus 100 outputs the depth obtained for the captured image, the reliability, and the calibrated distance (S310).

As described above, the image processing apparatus according to the present embodiment has a function of obtaining a distance from a difference image and executes calibration with the distance obtained from a highly reliable depth. Accordingly, it is possible to improve the reliability of the distance calculated based on the pixel.

Third Embodiment

Hereinafter, differences from the second embodiment will be described mainly according to the present embodiment.

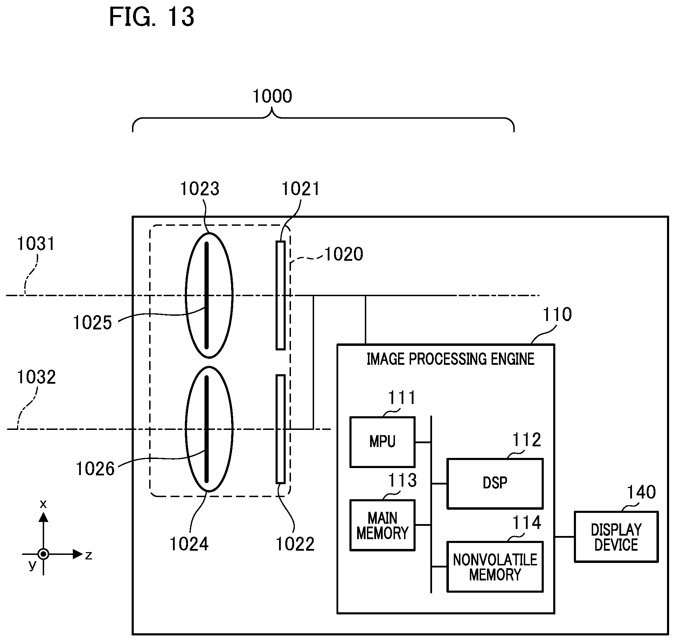

Here, a configuration example of an image processing apparatus according to a third embodiment will be described with reference to FIG. 13.

FIG. 13 is a diagram illustrating a hardware and software configuration of an image processing apparatus according to the third embodiment.

The image processing apparatus 100 described in the second embodiment may also have the configuration illustrated in FIG. 13. In this configuration, an imaging mechanism 1020 is a so-called stereo camera. The imaging mechanism 1020 according to the present embodiment includes two image sensors 1021 and 1022 and two optical systems 1023 and 1024. The optical systems 1023 and 1024 are imaging lenses of the imaging mechanism 1020 and have a function of forming an image of a subject on image sensor 1021 or 1022. Each of the optical systems 1023 and 1024 includes a plurality of lens groups (not illustrated) and an aperture stop (not illustrated), and has an exit pupil 1025 or 1026 located at a position away by a predetermined distance from the image sensor 1021 or 1022. At this time, the optical axes of the optical systems 1023 and 1024 are denoted by reference numerals 1031 and 1032, respectively.

According to the present embodiment, the image processing apparatus in which the imaging mechanism 1020 is a stereo camera can provide a function of calculating a depth and a distance.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of priority from Japanese Patent Application No. 2024-157012, filed on September 10, 2024, which is hereby incorporated by reference herein in its entirety.

## Claims

1. An image processing apparatus (100) that obtains a depth from an input image, the image processing apparatus comprising:

   a depth information acquisition unit (102) configured to acquire depth information;
   a ground region determination unit (103) configured to determine a ground region of a subject of the image; and
   a reliability calculation unit (104) configured to calculate reliability for the depth acquired by the depth information acquisition unit based on the determination of the ground region determination unit.

2. The image processing apparatus according to claim 1, wherein the depth acquired by the depth information acquisition unit is an absolute distance between a standard point and a subject.

3. The image processing apparatus according to any one of claims 1 to 2, wherein the depth acquired by the depth information acquisition unit is an evaluation value relatively indicating a distance between a standard point and a subject.

4. The image processing apparatus according to any one of claims 1 to 3, wherein the ground region determination unit determines the ground region based on a change in a depth acquired for a pixel of an image.

5. The image processing apparatus according to any one of claims 1 to 4, wherein the reliability calculation unit calculates high reliability of the depth of a pixel of the ground region.

6. The image processing apparatus according to any one of claims 1 to 4, wherein the reliability calculation unit executes segmentation of the image for each region and calculates high reliability when the segmented region includes the ground region.

7. The image processing apparatus according to any one of claims 1 to 6, further comprising:

   a distance calculation unit (106) configured to calculate a distance from a standard point to a pixel from a plurality of images having a disparity in accordance with a distance; and
   a calibration unit (107) configured to execute calibration between a distance obtained from the depth acquired by the depth information acquisition unit and a distance obtained from the distance calculation unit.

8. The image processing apparatus according to claim 7, wherein the calibration unit includes

   a scaling coefficient calculation unit configured to calculate a scaling coefficient of a fitting function from at least two depths of which the reliability is high, and
   a scaling unit configured to convert the depth into an absolute distance value using the fitting function that has the scaling coefficient calculated by the scaling coefficient calculation unit.

9. The image processing apparatus according to claim 8, wherein, at a distance calculated by scaling the depth for each pixel by the depth information acquisition unit and a distance for each pixel by the distance calculation unit, the calibration unit sets the distance calculated by scaling the depth for each pixel by the depth information acquisition unit as a distance of the corresponding pixel when the reliability is greater than a predetermined threshold.

10. The image processing apparatus according to any one of claims 1 to 9, further comprising:

    an imaging mechanism (120) configured to capture an image,
    wherein the image captured by the imaging mechanism is input.

11. The image processing apparatus according to claim 10, wherein the imaging mechanism includes

an image sensor (121), and
an optical system (122) configured to form an image of a subject on the image sensor,
wherein the image sensor acquires an image of a single exit pupil.

12. The image processing apparatus according to claim 10,

wherein the imaging mechanism includes an optical system and an image sensor,
wherein the optical system forms an image of a subject on the image sensor, and
wherein the image sensor includes a first photoelectric conversion portion generating a first image and a second photoelectric conversion portion generating a second image.

13. The image processing apparatus according to claim 10,

wherein the imaging mechanism includes a first image sensor, a first optical system configured to form an image of a subject on the first image sensor, a second image sensor, and a second optical system configured to form the image of the subject on the second image sensor, and
wherein the first image sensor captures a first image from a first exit pupil, and the second image sensor acquires a second image from a second exit pupil.

14. An image processing method by an image processing apparatus that obtains a depth from an input image, the method comprising:

a depth acquisition step of acquiring, by the image processing apparatus, depth information;
a ground region determination step of determining, by the image processing apparatus, a ground region of a subject of the image; and
a reliability calculation step of calculating, by the image processing apparatus, reliability for the depth acquired in the depth acquisition step based on the determination of the ground region determination step,
wherein, in the reliability calculation step, high reliability for the depth of a pixel of the ground region is calculated, or segmentation of the image for each region is executed and high reliability is calculated when the segmented region includes the ground region.

15. A non-transitory computer-readable storage medium configured to store a computer program comprising instructions for executing the functions of the following units:
at least one processor or circuit executing the steps described in claim 14.

FIG. 1

100

IMAGE PROCESSING APPARATUS

| IMAGING UNIT | ~101 |

| DEPTH INFORMATION ACQUISITION UNIT | ~102 |

| GROUND REGION DETERMINATION UNIT | ~103 |

| RELIABILITY CALCULATION UNIT | ~104 |

| IMAGE PROCESSING RESULT OUTPUT UNIT | ~105 |

FIG. 2

IMAGE PROCESSING ENGINE

MPU 111

DSP 112

MAIN MEMORY 113

NONVOLATILE MEMORY 114

DISPLAY DEVICE 140

IMAGE DATA 11

DEPTH RESULT DATA 12

DEPTH INFORMATION ACQUISITION PROGRAM 31

GROUND REGION DETERMINATION PROGRAM 32

RELIABILITY CALCULATION PROGRAM 33

# FIG. 3

```
        START
          │
          ▼
   ACQUIRE IMAGE        ─ S210
          │
          ▼
  DEPTH INFORMATION     ─ S220
  ACQUISITION PROCESS
          │
          ▼
   GROUND REGION        ─ S230
DETERMINATION PROCESS
          │
          ▼
RELIABILITY CALCULATION ─ S240
      PROCESS
          │
          ▼
  OUTPUT DEPTH AND      ─ S300
     RELIABILITY
          │
          ▼
         END
```

FIG. 4

```
        ┌─────────────────────────────┐
        │   RELIABILITY CALCULATION   │
        │          PROCESS            │
        └─────────────────────────────┘
                      │
                      ▼
        ┌─────────────────────────────┐
        │    SEGMENTATION PROCESS     │──S241
        └─────────────────────────────┘
                      │
                      ▼
        ┌─────────────────────────────┐
        │ DETERMINE WHETHER SEGMENTED │──S242
        │ REGION INCLUDES GROUND REGION│
        └─────────────────────────────┘
                      │
                      ▼
        ┌─────────────────────────────┐
        │ CALCULATE RELIABILITY BASED ON│──S243
        │  RESULT OF WHETHER GROUND   │
        │     REGION IS INCLUDED      │
        └─────────────────────────────┘
                      │
                      ▼
        ┌─────────────────────────────┐
        │             END             │
        └─────────────────────────────┘
```

FIG. 5A

FIG. 5B

FIG. 5C

FIG. 6A

FIG. 6B

R502

R501

R504

R503

# FIG. 7

100

```
IMAGE PROCESSING APPARATUS

    ┌─────────────────────────┐
    │      IMAGING UNIT        │ ~ 101
    └─────────────────────────┘

    ┌─────────────────────────┐
    │   DEPTH INFORMATION      │ ~ 102
    │   ACQUISITION UNIT       │
    └─────────────────────────┘

    ┌─────────────────────────┐
    │    GROUND REGION         │ ~ 103
    │  DETERMINATION UNIT      │
    └─────────────────────────┘

    ┌─────────────────────────┐
    │     RELIABILITY          │ ~ 104
    │  CALCULATION UNIT        │
    └─────────────────────────┘

    ┌─────────────────────────┐
    │   IMAGE PROCESSING       │ ~ 105
    │  RESULT OUTPUT UNIT      │
    └─────────────────────────┘

    ┌─────────────────────────┐
    │     RELIABILITY          │ ~ 106
    │  CALCULATION UNIT        │
    └─────────────────────────┘
```

107

```
CALIBRATION UNIT

    ┌─────────────────────────┐
    │  SCALING COEFFICIENT     │ ~ 107a
    │  CALCULATION UNIT        │
    └─────────────────────────┘

    ┌─────────────────────────┐
    │      SCALING UNIT        │ ~ 107b
    └─────────────────────────┘
```

FIG. 8

FIG. 9A

FIG. 9B

661G1    661R    665

663 {

664 {

662-2

662-1

y
z
x

FIG. 10

FIG. 11A

# FIG. 11B

# FIG. 12

```
                    ┌──────────────────┐
                    │      START       │
                    └──────────────────┘
                             │
                             ▼
                    ┌──────────────────┐
                    │  ACQUIRE IMAGE   │────S210
                    └──────────────────┘
                             │
                             ▼
                    ┌──────────────────┐
                    │ DEPTH INFORMATION│────S220
                    │ACQUISITION PROCESS│
                    └──────────────────┘
                             │
                             ▼
                    ┌──────────────────┐
                    │  GROUND REGION   │────S230
                    │DETERMINATION PROCESS│
                    └──────────────────┘
                             │
                             ▼
                    ┌──────────────────┐
                    │║   RELIABILITY   │────S240
                    │║CALCULATION PROCESS│
                    └──────────────────┘
                             │
                             ▼
                    ┌──────────────────┐
                    │ SCALING COEFFICIENT│────S250
                    │CALCULATION PROCESS│
                    └──────────────────┘
                             │
                             ▼
                    ┌──────────────────┐
                    │ SCALING PROCESS  │────S260
                    └──────────────────┘
                             │
                             ▼
                    ┌──────────────────┐
                    │CALIBRATION PROCESS│────S270
                    └──────────────────┘
                             │
                             ▼
                    ┌──────────────────┐
                    │ OUTPUT DEPTH AND │────S310
                    │   RELIABILITY    │
                    └──────────────────┘
                             │
                             ▼
                    ┌──────────────────┐
                    │       END        │
                    └──────────────────┘
```

FIG. 13

1000

1023    1021

1031

1020

1025

110

IMAGE PROCESSING ENGINE

1032

111

MPU

112

DSP

1026

113

140

1024    1022

MAIN
MEMORY

114

NONVOLATILE
MEMORY

DISPLAY
DEVICE

x

z

y

**EUROPEAN SEARCH REPORT**

Europäisches Patentamt
European Patent Office
Office européen des brevets

Application Number

EP 25 19 3655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU KEWEI: "Monocular relative depth reordering by propagating confidence of local and global cues", MULTIMEDIA TOOLS AND APPLICATIONS, KLUWER ACADEMIC PUBLISHERS, BOSTON, US, vol. 78, no. 19, 17 December 2017 (2017-12-17), pages 27155-27173, XP036882792, ISSN: 1380-7501, DOI: 10.1007/S11042-017-5432-0 [retrieved on 2017-12-17] | 1-8, 10-15 | INV. G06T7/50 |
| A | * the whole document * | 9 | |
| L | DEREK HOIEM ET AL: "Recovering Occlusion Boundaries from a Single Image", ICCV 2007. IEEE 11TH INTERNATIONAL CONFERENCE ON COMPUTER VISION, 2007, IEEE, 1 October 2007 (2007-10-01), pages 1-8, XP031194474, ISBN: 978-1-4244-1630-1 | 4 | |
| A | EP 4 246 467 A1 (CANON KK [JP]) 20 September 2023 (2023-09-20) * the whole document * | 1-15 | TECHNICAL FIELDS SEARCHED (IPC) G06T |
| A | US 2022/215573 A1 (HU RONGDONG [CN] ET AL) 7 July 2022 (2022-07-07) * the whole document * | 1-15 | |
| A | QIN ZEQUN ET AL: "MonoGround: Detecting Monocular 3D Objects from the Ground", 2022 IEEE/CVF CONFERENCE ON COMPUTER VISION AND PATTERN RECOGNITION (CVPR), IEEE, 18 June 2022 (2022-06-18), pages 3783-3792, XP034194972, DOI: 10.1109/CVPR52688.2022.00377 [retrieved on 2022-09-27] * the whole document * | 1-15 | |

The present search report has been drawn up for all claims

| Place of search | Date of completion of the search | Examiner |
|---|---|---|
| Munich | 1 December 2025 | Yilmaz, Özgün |

## ANNEX TO THE EUROPEAN SEARCH REPORT
## ON EUROPEAN PATENT APPLICATION NO.

EP 25 19 3655

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | | Publication date | Patent family member(s) | | Publication date |
|---|---|---|---|---|---|
| EP 4246467 | A1 | 20-09-2023 | CN | 116736277 A | 12-09-2023 |
| | | | EP | 4246467 A1 | 20-09-2023 |
| | | | JP | 2023131720 A | 22-09-2023 |
| | | | US | 2023286548 A1 | 14-09-2023 |
| US 2022215573 | A1 | 07-07-2022 | CN | 109903346 A | 18-06-2019 |
| | | | US | 2022215573 A1 | 07-07-2022 |
| | | | WO | 2020228694 A1 | 19-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007188417 A

- JP 2024157012 A

**Non-patent literature cited in the description**

- **DIJK, TOM VAN** ; **GUIDO DE CROON**. How Do Neural Networks See Depth in Single Images?. *Proceedings of the IEEE International Conference on Computer Vision.*, 2019
- **RANFTL, R.** ; **LASINGER, K.** ; **HAFNER, D.** ; **SCHINDLER, K.** ; **KOLTUN, V.** Towards RoBust Monocular Depth Estimation: Mixing Datasets for Zero-shot Cross-dataset Transfer.. *IEEE TPAMI*, 2020

- **YUWEN XIONG** ; **RENJIE LIAO** ; **HENGSHUANG ZHAO** ; **RUI HU** ; **MIN BAI** ; **ERSIN YUMER** ; **RAQUEL URTASUN**. UPSNet: A Unified Panoptic Segmentation Network. *CVPR*, 2019